(19) Europäisches Patentamt
European Patent Office
Office européen des brevets

(11) Veröffentlichungsnummer: **0 364 798 A2**

(12) **EUROPÄISCHE PATENTANMELDUNG**

(21) Anmeldenummer: **89118154.7**

(51) Int. Cl.[5]: **C08F 8/12**

(22) Anmeldetag: **30.09.89**

(30) Priorität: **10.10.88 DE 3834435**

(43) Veröffentlichungstag der Anmeldung: **25.04.90 Patentblatt 90/17**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Moench, Dietmar, Dr.**
**Akazienweg 7**
**D-6940 Weinheim(DE)**
Erfinder: **Stange, Andreas, Dr.**
**Kantstrasse 8**
**D-6800 Mannheim 1(DE)**
Erfinder: **Liebe, Joerg, Dr.**
**Wingertstrasse 53**
**D-6710 Frankenthal(DE)**
Erfinder: **Hartmann, Heinrich, Dr.**
**Weinheimer Strasse 46**
**D-6703 Limburgerhof(DE)**
Erfinder: **Merger, Franz, Dr.**
**Max-Slevogt-Strasse 25**
**D-6710 Frankenthal(DE)**
Erfinder: **Schwartz, Manfred, Dr.**
**Friesenstrasse 24**
**D-6700 Ludwigshafen(DE)**

(54) **Verbrückte, wasserlösliche Copolymerisate, Verfahren zu ihrer Herstellung und ihre Verwendung.**

(57) Verbrückte, wasserlösliche Copolymerisate, die erhältlich sind durch

(A) Copolymerisieren von Monomergemischen aus

(a) 50 bis 99 Mol.% Acrylamid und/oder Methacrylamid,
(b) 50 bis 1 Mol.% eines Acetalgruppen enthaltenden monoethylenisch ungesättigten Monomeren und
(c) 0 bis 20 Mol.% von (a) und (b) verschiedenen Monomeren,

in Gegenwart von Polymerisationsinitiatoren unter solchen Bedingungen, daß die Acetalgruppen der Monomeren (b) praktisch nicht hydrolysieren,

(B) Hydrolysieren der Acetalgruppen der in den Copolymerisaten (A) einpolymerisiert enthaltenen Monomeren (b),

(C) Kondensieren der Aldehydgruppen enthaltenden Copolymerisate (B) bei pH-Werten oberhalb von 5 bis höchstens zu einem solchen Grad, daß die entstehenden Kondensate noch wasserlöslich sind und

(D) Abstoppen der Kondensationsreaktion durch Zugabe von Säure bis auf pH-Werte von 3 oder darunter,

Verfahren zur Herstellung der verbrückten, wasserlöslichen Copolymerisate und Verwendung der verbrückten, wasserlöslichen Copolymerisate als Zusatz zum Papierstoff bei der Papierherstellung zur Erhöhung der Naßfestigkeit von Papier.

EP 0 364 798 A2

## Verbrückte, wasserlösliche Copolymerisate, Verfahren zu ihrer Herstellung und ihre Verwendung

Aus der US-PS 3 556 932 ist bekannt, daß kationisch modifizierte, mit Glyoxal aktivierte Polyacrylamide bei der Herstellung von Papier als Naßverfestigungsmittel geeignet sind. Das Ausgangspolymerisat wird durch die Umsetzung mit Glyoxal partiell verbrückt. Bei der Lagerung der mit Glyoxal umgesetzten Polymerisate beobachtet man neben einer Verschlechterung der Wirksamkeit als Naßverfestiger einen Pelzbefall der Polymerlösungen.

Aus der DE-OS 2 757 206 sind Polymerisate bekannt, die Acetalgruppen enthaltende monoethylenisch ungesättigte Monomere einpolymerisiert enthalten. Diese Polymerisate sind aufgrund ihres Gehaltes an Amidoacetalgruppen leicht modifizierbar und werden beispielsweise für die Herstellung von Formkörpern, Überzügen oder Klebemitteln verwendet.

Aus der US-PS 4 605 781 sind wasserlösliche Polymerisate bekannt, die mindestens 2 Mol.% eines Acetalgruppen enthaltenden Monomeren einpolymerisiert enthalten. Wie darin außerdem beschrieben wird, eignen sich diese durch Einwirkung von Salzsäure hydrolysierten und Aldehydgruppen aufweisenden Polymerisate als Naßverfestiger bei der Herstellung von Papier. Die Lagerstabilität der hydrolysierten Produkte läßt jedoch sehr zu wünschen übrig, weil vernetzte Produkte entstehen. Außerdem ist die Wirksamkeit der hydrolysierten Produkte als Naßfestmittel verbesserungsbedürftig.

Der vorliegenden Erfindung liegt die Aufgabe zugrunde, wasserlösliche Copolymerisate zur Verfügung zu stellen, die bei der Anwendung als Naßverfestiger bei der Papierherstellung gegenüber bekannten Aldehydgruppen enthaltenden Copolymerisaten eine verbesserte Wirksamkeit und Lagerstabilität aufweisen.

Die Aufgabe wird erfindungsgemäß gelöst mit verbrückten, wasserlöslichen Copolymerisaten, die erhältlich sind durch

(A) Copolymerisieren von Monomergemischen aus

(a) 50 bis 99 Mol.% Acrylamid und/oder Methacrylamid,

(b) 50 bis 1 Mol.% eines Acetalgruppen enthaltenden monoethylenisch ungesättigten Monomeren und

(c) 0 bis 20 Mol.% von (a) und (b) verschiedenen Monomeren,

wobei die Summe der Angaben in Mol.% (a) bis (c) immer 100 beträgt, in Gegenwart von Polymerisationsinitiatoren unter solchen Bedingungen, daß die Acetalgruppen der Monomeren (b) praktisch nicht hydrolysieren, zu Copolymerisaten mit K-Werten von 10 bis 70,

(B) Hydrolysieren der Acetalgruppen der in den Copolymerisaten (A) einpolymerisiert enthaltenen Monomeren (b) zu Aldehydgruppen bei pH-Werten unterhalb von 5,

(C) Kondensieren der Aldehydgruppen enthaltenden Copolymerisate (B) bei pH-Werten oberhalb von 5 bis höchstens zu einem solchen Grad, daß die entstehenden Kondensate noch wasserlöslich sind und

(D) Abstoppen der Kondensationsreaktion durch Zugabe von Säure bis auf pH-Werte von 3 oder darunter.

Die so erhältlichen Copolymerisate sind lagerstabil und werden als Zusatz zum Papierstoff bei der Papierherstellung verwendet, um die Naßfestigkeit von Papier zu erhöhen.

Die verbrückten, wasserlöslichen Copolymerisate werden in einem mehrstufigen Verfahren hergestellt. In der Verfahrensstufe (A) erfolgt zunächst die Herstellung der Copolymerisate durch Copolymerisieren der Monomeren (a), (b) und gegebenenfalls (c). Als Monomere der Gruppe (a) werden Acrylamid, Methacrylamid oder Mischungen aus Acrylamid und Methacrylamid in jedem beliebigen Verhältnis eingesetzt. Der Anteil dieser Monomeren in der Monomermischung, die copolymerisiert wird, beträgt 50 bis 99, vorzugsweise 70 bis 90 Mol.%.

Als Monomere der Gruppe (b) werden Acetalgruppen enthaltende monoethylenisch ungesättigte Verbindungen eingesetzt. Geeignete Beispiele hierfür sind in der DE-OS 27 57 206 und in der US-PS 4 605 718 angegeben. Hierbei handelt es sich beispielsweise um Verbindungen der allgemeinen Formel

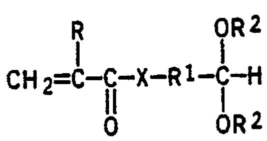

(I),

in der

R = H, $CH_3$, $C_2H_5$,

X = O, NH,

$R^1$ = $C_1$ bis $C_8$-Alkylen, Arylen und

$R^2$ = $C_1$- bis $C_4$-Alkyl oder beide $R^2$ für eine $C_2$- bis $C_4$-Alkylengruppe stehen.

Beispielsweise eignen sich folgende Verbindungen:

$CH_2 = CH\text{-}CO\text{-}NH\text{-}CH_2\text{-}CH_2\text{-}CH(OCH_3)_2$,

$CH_2\text{-}CH\text{-}CO\text{-}NH\text{-}CH_2\text{-}CH_2\text{-}CH(OC_2H_5)_2$,

$CH_2 = CH\text{-}CO\text{-}NH\text{-}CH_2\text{-}CH_2\text{-}CH_2\text{-}CH(OCH_3)_2$,

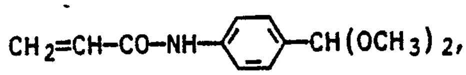

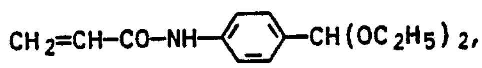

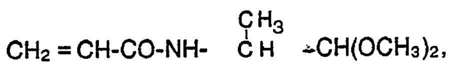

$CH_2 = CH\text{-}CO\text{-}NH\text{-}CH_2\text{-}CH(OCH_3)_2$,

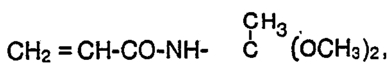

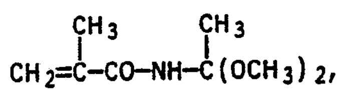

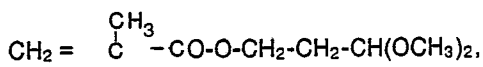

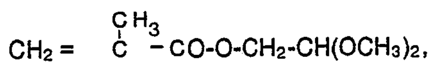

$CH_2 = CH\text{-}CO\text{-}O\text{-}CH_2\text{-}CH(OCH_3)_2$,

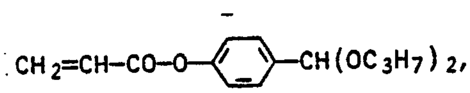

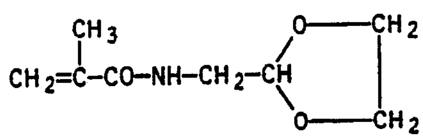

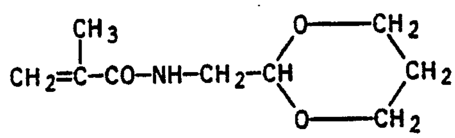 und

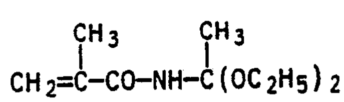 .

Vorzugsweise verwendet man Monomere der Formel

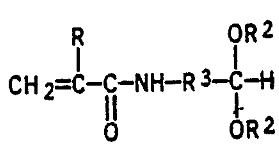 (II),

in der

R = H, $CH_3$, $C_2H_5$,
$R^3$ = $C_2$- bis $C_4$-Alkylen und
$R^2$ = $C_1$- bis $C_4$-Alkyl oder beide $R^2$ für eine $C_2$- bis $C_4$-Alkylengruppe stehen,
einsetzt.

Als Monomer der Gruppe (b) kommen insbesondere

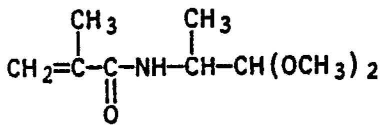

und

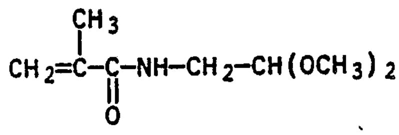

in Betracht.

Bei der Copolymerisation werden die Monomeren der Gruppe (b) zu 50 bis 1, vorzugsweise 25 bis 5 Mol.% in der Monomermischung eingesetzt. Es ist selbstverständlich auch möglich, unterschiedliche Acetalgruppen enthaltende Monomere der Formel (I) bei der Copolymerisation mit den Monomeren (a) und gegebenenfalls dem Monomeren (c) einzusetzen.

Als Monomere der Gruppe (c) eignen sich beispielsweise Verbindungen der Formeln

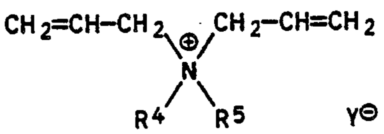

(III)

in der
$R^4$, $R^5$ = $C_1$- bis $C_{10}$-Alkyl und
Y = Cl, Br, Methosulfat und Ethosulfat
bedeuten, und

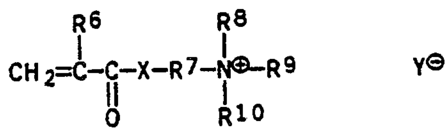

(IV),

in der
$R^6$ = H, $CH_3$, $C_2H_5$,
X = O, $NR^6$
$R^7$ = $C_1$- bis $C_6$-Alkylen
$R^8$, $R^9$ und $R^{10}$ = H, $CH_3$, $C_2H_5$, $(CH_2\text{-}CH_2\text{-}O)_n$-H,
n = 1 bis 6 und
Y = Cl, Br, J, Sulfat, Methosulfat, Ethosulfat.

Von den Verbindungen der Gruppe (c) werden vorzugsweise Diallyldimethylammoniumchlorid und Methacrylamidopropyltrimethylammoniumchlorid eingesetzt. Sofern die Monomeren der Gruppe (c) bei der Copolymerisation verwendet werden, liegen sie in Mengen bis zu 20 Mol.%, vorzugsweise 2 bis 15 Mol.% in den Monomermischungen vor. Bevorzugt ist die Herstellung von Terpolymerisaten aus (a) Acrylamid, (b) (1,1-Dimethoxyprop-2-yl)methacrylamid oder (1,1-Dimethoxyeth-2-yl)methacrylamid und (c) Diallyldimethylammoniumchlorid oder Methacrylamidopropyltrimethylammoniumchlorid.

Die Copolymerisation der Monomeren (a), (b) und gegebenenfalls (c) erfolgt in wäßriger Lösung in Gegenwart von Polymerisationsinitiatoren, die unter den Polymerisationsbedingungen in Radikale zerfallen. Geeignete Polymerisationsinitiatoren sind beispielsweise Wasserstoffperoxid, Alkali- und Ammoniumsalze der Peroxischwefelsäure, Peroxide, Hydroperoxide, Redoxkatalysatoren und in Radikale zerfallende Azoverbindungen. Besonders geeignet sind wasserlösliche Azoverbindungen, wie z.B. 2,2′-Azobis(N,N′-dimethylenisobutyramidin)dihydrochlorid, 2,2′-Azobis-(2-amidinopropan)-dihydrochlorid oder 2,2′-Azobis[2-methyl-N-(2-hydroxyethyl)propionamid].

Die Polymerisationsinitiatoren werden in den üblichen Mengen eingesetzt, z B. 0, 5 bis 5, 0 Gew.%, bezogen auf die zu polymerisierenden Monomeren. Die Polymerisation kann in einem weiten Temperaturbereich, gegebenenfalls unter vermindertem Druck, unter Normaldruck oder auch unter erhöhtem Druck vorgenommen werden. Vorzugsweise erfolgt die Polymerisation bei Temperaturen bis zu 100 °C, insbesondere in dem Bereich von 70 bis 100°C. Die Polymerisation kann gegebenenfalls in Gegenwart von Polymerisationsreglern durchgeführt werden. Geeignete Polymerisationsregler sind beispielsweise Alkohole, wie Methanol, Ethanol, n-Propanol, iso-Propanol, sowie Ketone, wie Aceton und Methylethylketon. Als Polymerisationsregler können auch Hydroxylammoniumsalze, wie Hydroxylammoniumsulfat, chlorierte Kohlenwasserstoffe oder Thioverbindungen, wie Thioglykolsäure, Dodecylmercaptan oder 2-Mercaptoethanol verwendet werden. Die Regler werden in Mengen von 0,001 bis 60, vorzugsweise 1 bis 40 Gew.%, bezogen auf die eingesetzten Monomeren, verwendet. Schwache Regler, wie Alkohole, werden dabei in höherer Menge eingesetzt als die besonders stark regelnden Thioverbindungen. Die Konzentration der Monomeren in dem Reaktionsgemisch wird so gewählt, daß Polymerisatlösungen anfallen, deren Feststoffgehalt 1 bis 60, vorzugsweise 10 bis 30 Gew.% beträgt. Die Copolymerisation wird unter solchen Bedingungen durchgeführt, daß die Acetalgruppen der Monomeren (b) dabei praktisch nicht hydrolysieren. Dieser Forderung wird dadurch entsprochen, daß der pH-Wert des Reaktionsgemisches in dem Bereich von 6 bis 10, vorzugsweise 7 bis 9 eingestellt und gehalten wird.

Im Verfahrensschritt (B) werden die wäßrigen Copolymerisatlösungen auf pH-Werte unterhalb von 5 eingestellt, so daß die Acetalgruppen der in den Copolymerisaten (A) einpolymerisiert enthaltenen Monomeren (b) zu Aldehydgruppen hydrolysieren. Die Acetalgruppen enthaltenden Copolymerisate (A) werden zu mindestens 30 %, vorzugsweise 70 bis 100 % hydrolysiert. Die Hydrolyse wird durch Zugabe von Säuren, z.B. Salzsäure, Bromwasserstoffsäure, Schwefelsäure, Phosphorsäure, Ameisensäure zu der gemäß (A) erhaltenen Copolymerisatlösung vorgenommen. Die Hydrolyse erfolgt bei Temperaturen von 20 bis 100, vorzugsweise 30 bis 60 °C. Sie wird im übrigen so durchgeführt, wie in der US-PS 4 605 718 angegeben ist. Die Viskosität von 20 gew.%igen Lösungen der hydrolysierten Copolymerisate beträgt bei 22 °C mindestens 5 bis 200 mPas und liegt vorzugsweise zwischen 5 und 25 mPas.

Im Verfahrensschritt (C) werden die im Verfahrensschritt (B) erhaltenen Aldehydgruppen aufweisenden Copolymerisate (B) bei pH-Werten oberhalb von 5 bis etwa 11, bis höchstens zu einem solchen Grad kondensiert, daß noch wasserlösliche Polymerisate vorliegen. Geeignete Basen sind beispielsweise Natronlauge, Kalilauge, Ammoniak und Amine, z.B. Triethylamin, Triethanolamin, Morpholin und Ethanolamin. Der pH-Wert der Reaktionslösung wird während der Kondensationsreaktion (C) vorzugsweise in dem Bereich von 7 bis 9 gehalten. Die Temperatur der wäßrigen Lösung beträgt bei der Kondensation 20 bis 80, vorzugsweise 30 bis 50 °C. Der Polymerisatgehalt der wäßrigen Lösung während der Kondensationsreaktion (C) beträgt vorteilhaft 10 bis 50, vorzugsweise 15 bis 25 Gew.%. Die Kondensationsreaktion läßt sich an einer Erhöhung der Viskosität des Reaktionsgemisches verfolgen. 20 gew.%ige wäßrige Polymerlösungen, die bei dem Verfahrensschritt (B) anfallen, haben Viskositäten in dem Bereich von 5 bis 200 mPas [-(gemessen mit einem Rotations-Viskosimeter (Contraves Rheomat 15 T) bei 22 °C und 152 UpM). Der pH-Wert bei der Messung beträgt 2]. Die Viskosität einer solchen wäßrigen Lösung wird durch das Kondensieren gemäß Verfahrensschritt (C) auf Werte von 20 bis 1000 mPas erhöht (gemessen an einer 20 gew.%igen wäßrigen Polymerlösung bei 22 °C). Bei der Kondensation werden verbrückte, wasserlösliche Polymerisate erhalten, die vermutlich durch Reaktion von Acrylamidgruppen einer Kette mit Aldehydgruppen einer anderen Kette des Copolymerisates nach folgendem Schema entstehen:

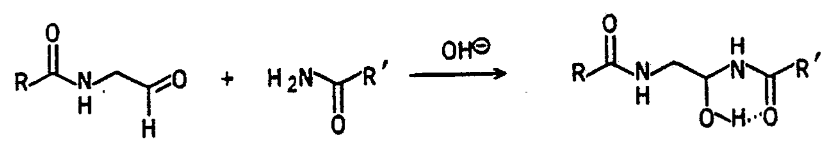


R und R′ bedeuten jeweils Polymerketten. Diese Reaktion ist durch Säurezugabe nicht reversibel, kann jedoch dadurch abgestoppt werden. Die bei dem Verfahrensschritt (C) anfallenden wäßrigen Lösungen haben bei einem Polymergehalt von 20 Gew.% bei 22 °C vorzugsweise Viskositäten von 20 bis 200 mPas, wobei wäßrige Copolymerisatlösungen mit Viskositäten von 25 bis 50 mPas (bestimmt an 20 gew.%igen wäßrigen Polymerlösungen bei 22 °C) besonders lagerstabil sind. Die Viskosität der gemäß (C) erhaltenen wäßrigen Copolymerlösungen (20 Gew.%/22 °C) ist um mindestens 5 mPas, vorzugsweise mehr als 10 mPas höher als die der im Verfahrensschritt (B) erhaltenen wäßrigen Copolymerisatlösungen, ebenfalls

gemessen bei 20 Gew.% Copolymergehalt und 22 °C.

Die Kondensationsreaktion, bei der verbrückte, wasserlösliche Copolymerisate entstehen, wird im Verfahrensschritt (D) durch Zugabe einer Säure abgestoppt. Der pH-Wert der Lösung wird auf Werte von 3 oder darunter eingestellt. Z.B. gibt man eine solche Menge an Mineralsäure zu, daß die Reaktionslösung einen pH-Wert von 0 bis 3, vorzugsweise 1 bis 2 aufweist. Geeignete Säuren zum Abstoppen der Reaktion sind beispielsweise Salzsäure, Bromwasserstoffsäure, Schwefelsäure, Phosphorsäure, Ameisensäure.

Die so erhältlichen verbrückten Copolymerisatlösungen können direkt als Zusatz zum Papierstoff bei der Papierherstellung zur Erhöhung der Naßfestigkeit von Papier angewendet werden. Bezogen auf trockenen Phaserstoff verwendet man 0,01 bis 10, vorzugsweise 0,09 bis 2 Gew.% an verbrückten Copolymerisaten. Überraschenderweise erhält man bei Einsatz der verbrückten Copolymerisate bei der Papierherstellung Papiersorten mit einer höheren Naßfestigkeit als bei der gleichen Anwendungsmenge von Aldehydgruppen enthaltenden Copolymerisaten, die aus der US-PS 4 605 718 bekannt sind. Zudem haben die erfindungsgemäßen verbrückten Copolymerisate in wäßriger Lösung gegenüber den Aldehydgruppen enthaltenden Copolymerisaten des Standes der Technik eine wesentlich verbesserte Lagerstabilität.

Der K-Wert der Copolymerisate, die bei dem Verfahrensschritt (A) anfallen, beträgt 10 bis 70, vorzugsweise 15 bis 40.

Der K-Wert der Copolymerisate wurde nach H. Fikentscher, Cellulosechemie, Band. 13, 58-64 und 71-74 (1932) in wäßriger Lösung bei einer Temperatur von 25 °C und einer Polymerkonzentration von 1 Gew.% bei einem pH-Wert von 8 gemessen; dabei bedeutet $K=k \cdot 10^3$. Sämtliche Viskositätsangaben beziehen sich auf Messungen an 20 gew.%igen wäßrigen Copolymerisatlösungen bei 22 °C mit einem Rotationsviskosimeter (Contraves Rheomat 15 T) bei 152 UpM.

Beispiel 1

(A) Herstellung eines Terpolymeren aus 75 Mol.% Acrylamid, 20 Mol.% (1,1-Dimethoxyprop-2-yl)-methacrylamid und 5 Mol.% Diallyldimethylammoniumchlorid

In einem 2-l-Kolben, der mit einem Rührer, Thermometer, Gaseinleitungsrohr und Rückflußkühler versehen ist, wird eine Vorlage aus 61 g einer 66 gew.%igen wäßrigen Lösung von Diallyldimethylammoniumchlorid, 300 g Wasser, 70 g Isopropanol und 0,4 g Diethylentriaminpentaessigsäure-Natriumsalz unter gleichzeitigem Rühren und Einleiten von Stickstoff auf 90 °C erwärmt. Sobald die Temperatur der Vorlage 90 °C erreicht hat, gibt man innerhalb von 2,5 Stunden eine Lösung von 532,5g einer 50 gew.%igen wäßrigen Acrylamidlösung, 173 g (1,1-Dimethoxyprop-2-yl)methacrylamid und 70 g Isopropanol und getrennt davon bei gleichem Startzeitpunkt innerhalb von 4,5 Stunden eine Lösung von 18 g 2,2′-Azobis(2-amidinopropan)-dihydrochlorid zu. Nach Zugabe des Initiators wird das Reaktionsgemisch noch 1 Stunde bei 90 °C gerührt. Danach fügt man innerhalb von 1 Stunde 6 g 2,2′-Azobis(2-amidinopropan)dihydrochlorid in 125 g Wasser gelöst hinzu und läßt das Reaktionsgemisch nach Beendigung des Zulaufes noch 1 Stunde bei 90 °C auspolymerisieren. Sämtliche Zuläufe und die Vorlage wurden vor der Verwendung mit 10 gew.%iger Natronlauge auf pH 8 eingestellt. Dann destilliert man 450 g eines Isopropanol-Wasser-Gemisches ab. Man erhält eine wäßrige Copolymerisat-Lösung, deren Hydrieriodzahl 0,1 beträgt. Der K-Wert des Copolymerisates beträgt 26.

(B) Hydrolysieren der Acetalgruppen des Copolymerisates

In einem 500 ml fassenden Kolben aus Glas, der mit einem Rührer, Thermometer und Rückflußkühler versehen ist, versetzt man 220 g der nach (A) erhaltenen 36 gew.%igen Terpolymerisatlösung mit 8 g 10 gew.%iger Salzsäure und rührt das Reaktionsgemisch 6 Stunden bei 50 °C. Nach dieser Zeit sind praktisch sämtliche Acetalgruppen hydrolysiert.

(C) Kondensieren der Aldehydgruppen enthaltenden Copolymerisate gemäß (B)

In einem 2-l-fassenden Kolben aus Glas, der mit einem Rührer, Thermometer und Rückflußkühler versehen ist, gibt man zu einer Vorlage bestehend aus 220 g der 35 gew.%igen Lösung des hydrolysierten Copolymerisates gemäß (B) und 185 g einer Pufferlösung (10 g Dinatriumhydrogenphosphat und 175 g Wasser) 12,5g einer 10 %igen wäßrigen Natronlauge und stellt dadurch das Reaktionsgemisch auf einen pH-Wert von 8 ein. Es wird auf 35 °C erwärmt. Vor Zugabe der Natronlauge betrug die Viskosität einer 21 gew.%igen Lösung 10 mPas. Nachdem man die Reaktionsmischung 40 Minuten bei pH 8 und 35 °C gehalten hätte, wurde die Kondensationsreaktion abgestoppt, indem man im Verfahrensschritt

(D) 43 g 10 %iger Salzsäure zusetzte. Das Reaktionsgemisch hatte danach einen pH-Wert von 2. Nach dem Abkühlen auf 22 °C betrug die Viskosität einer 20 %igen wäßrigen Lösung 30 mPas.

Beispiele 2 bis 5

Analog zu der im Beispiel 1 angegebenen Verfahrensvorschrift wurden zunächst im Verfahrensschritt (A) die in Tabelle 1 angegebenen Terpolymerisate hergestellt.

Tabelle 1

| Bei-spiel Nr. | Verfahrensschritt (A) Polymerisieren von ... Mol.% Monomer bei pH = 8 | K-Wert des Copolymerisates | (B) Hydrolyse Zugabe von ... g 10 %iger HCl | pH | Visko-sität [mPas] |
|---|---|---|---|---|---|
| 2 | (a) 80 Acrylamid<br>(b) 10 (1,1-Dimethoxyprop-2-yl)methacrylamid und<br>(c) 10 Diallyldimethylammoniumchlorid | 28 | 8 | 2 | 6 |
| 3 | (a) 85 Acrylamid<br>(b) 10 (1,1-Dimethoxyprop-2-yl)methacrylamid und<br>(c) 5 Diallyldimethylammoniumchlorid | 27 | 8 | 2 | 7 |
| 4 | (a) 85 Acrylamid<br>(b) 10 (1,1-Dimethoxyprop-2-yl)methacrylamid und<br>(c) 5 Methacrylamidopropyltrimethylammoniumchlorid | 24 | 8 | 2 | 6 |
| 5 | (a) 75 Acrylamid<br>(b) 20 (1,1-Dimethoxyeth-2-yl)methacrylamid und<br>(c) 5 Diallyldimethylammoniumchlorid | 33 | 8 | 2 | 5 |

Tabelle 1 (Fortsetzung)

| Beispiel Nr. | (C) Kondensieren durch Zugabe von 10 %iger NaOH pH | (D) Abstoppen des Reaktionsgemisches Zugabe von 10 %iger HCl pH | Feststoffgehalt der Reaktionslösung (D) nach dem Zusatz von Säure | Viskosität [mPas] |
|---|---|---|---|---|
| 2 | 8 | 1,8 | 20,0 | 27 |
| 3 | 8 | 1,5 | 20,0 | 34 |
| 4 | 8 | 1,9 | 20,0 | 30 |
| 5 | 8 | 2,0 | 20,0 | 26 |

Die gemäß den Beispielen 1 bis 5 hergestellten verbrückten, wasserlöslichen Copolymerisate (jeweils die im Verfahrensschritt D) erhaltenen sauren Copolymerisatlösungen) sowie die gemäß Verfahrensschritt B der Beispiele erhaltenen Copolymerisatlösungen wurden als Naßfestmittel bei der Herstellung von Papier geprüft. Der Papierstoff bestand zu 50 % aus gebleichtem Nadelholzsulfit und zu 50 % aus gebleichtem Buchensulfit. Die Stoffdichte betrug 0,5 %. Die getesteten Copolymerisate wurden jeweils in einer Menge von 1 Gew.%, bezogen auf trockenen Faserstoff eingesetzt. Die Einwirkungszeit der Copolymerisate auf den Stoff lag bei 10 Minuten. Der Stoff wurde auf einem Rapid-Köthen-Blattbildner zu Papierblättern vom Flächengewicht 80 g/m² entwässert. Die Blätter wuren 6 Minuten bei 90 °C getrocknet und die Naßreißlänge gemessen. Zur Bestimmung der Naßreißlänge werden 1,5 cm breite Papierstreifen 30 sec in Wasser gelagert und gemäß der in DIN 51 221, Teil 1, beschriebenen Apparatur an feuchten Papierstreifen die Reißlänge bestimmt. Die Ergebnisse sind in der Tabelle 2 angegeben.

Tabelle 2

| Bsp.Nr./Vergl.Bsp. | | Copolymer | $L_N$[1] (m) | $L_N$[2] (m) | $L_N$[3] (m) | $L_N$[4] (m) |
|---|---|---|---|---|---|---|
| | 1 | 1 (B) | 681 | 619 | 514 | 490 |
| 1 | | 1 (D) | 850 | 798 | 678 | 711 |
| | 2 | 2 (B) | 353 | 342 | 233 | 278 |
| | 3 | 3 (B) | 390 | 389 | 269 | 294 |
| | 4 | 5 (B) | 480 | 420 | 320 | 310 |
| 2 | | 2 (D) | 597 | 571 | 480 | 465 |
| 3 | | 3 (D) | 508 | 564 | 448 | 458 |
| 4 | | 4 (D) | 619 | 588 | 508 | 464 |
| 5 | | 5 (D) | 1003 | 539 | 846 | 868 |

[1] Naßreißlänge ohne Alterung (Wasserlagerung 30 sek.)
[2] Naßreißlänge mit Alterung (Wasserlagerung 30 sek., 5 min bei 130 °C)
[3] Naßreißlänge ohne Alterung (Wasserlagerung 15 min.)
[4] Naßreißlänge mit Alterung (Wasserlagerung 15 min., 5 min bei 130 °C).

## Ansprüche

1. Verbrückte, wasserlösliche Copolymerisate, dadurch gekennzeichnet, daß sie erhältlich sind durch
(A) Copolymerisieren von Monomergemischen aus
(a) 50 bis 99 Mol.% Acrylamid und/oder Methacrylamid,
(b) 50 bis 1 Mol.% eines Acetalgruppen enthaltenden monoethylenisch ungesättigten Monomeren und
(c) 0 bis 20 Mol.% von (a) und (b) verschiedenen Monomeren,
wobei die Summe der Angaben in Mol.% (a) bis (c) immer 100 beträgt, in Gegenwart von Polymerisationsinitiatoren unter solchen Bedingungen, daß die Acetalgruppen der Monomeren (b) praktisch nicht hydrolysieren, zu Copolymerisaten mit K-Werten von 10 bis 70,
(B) Hydrolysieren der Acetalgruppen der in den Copolymerisaten (A) einpolymerisiert enthaltenen Monomeren (b) zu Aldehydgruppen bei pH-Werten unterhalb von 5,
(C) Kondensieren der Aldehydgruppen enthaltenden Copolymerisate (B) bei pH-Werten oberhalb von 5 bis höchstens zu einem solchen Grad, daß die entstehenden Kondensate noch wasserlöslich sind und
(D) Abstoppen der Kondensationsreaktion durch Zugabe von Säure bis auf pH-Werte von 3 oder darunter.

2. Verfahren zur Herstellung von verbrückten, wasserlöslichen Copolymerisaten, dadurch gekennzeichnet, daß man
(A) Monomergemische aus
(a) 50 bis 99 Mol.% Acrylamid und/oder Methacrylamid,
(b) 50 bis 1 Mol.% eines Acetalgruppen enthaltenden monoethylenisch ungesättigten Monomeren und
(c) 0 bis 20 Mol.% von (a) und (b) verschiedenen Monomeren,
wobei die Summe der Angaben in Mol.% (a) bis (c) immer 100 beträgt, in Gegenwart von Polymerisationsinitiatoren unter solchen Bedingungen polymerisiert, daß die Acetalgruppen der Monomeren (b) praktisch nicht hydrolysieren, zu Copolymerisaten mit K-Werten von 10 bis 70,

(B) die Acetalgruppen der in den Copolymerisaten (A) einpolymerisiert enthaltenen Monomeren (b) zu Aldehydgruppen bei pH-Werten unterhalb von 5 hydrolysiert,

(C) die Aldehydgruppen enthaltenen Copolymerisate (B) bei pH-Werten oberhalb von 5 bis höchstens zu einem solchen Grad kondensiert, daß die entstehenden Kondensate noch wasserlöslich sind und

(D) die Kondensationsreaktion durch Zugabe von Säure bis auf pH-Werte von 3 oder darunter abstoppt.

3. Verfahren nach Anspruch 2, dadurch gekennzeichnet, daß man als Monomer (b) Verbindungen der Formel

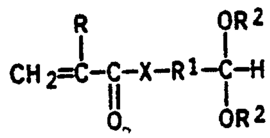

(I),

in der
R = H, $CH_3$, $C_2H_5$,
X = O, NH,
$R^1$ = $C_1$- bis $C_8$-Alkylen, Arylen und
$R^2$ = $C_1$- bis $C_4$-Alkyl oder beide $R^2$ für eine $C_2$- bis $C_4$-Alkylengruppe stehen,
einsetzt.

4. Verfahren nach den Ansprüchen 2 und 3, dadurch gekennzeichnet, daß man als Monomer (b) Verbindungen der Formel

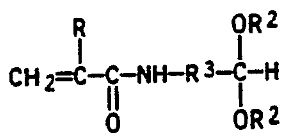

(II),

in der
R = H, $CH_3$, $C_2H_5$,
$R^3$ = $C_2$ bis $C_4$-Alkylen und
$R^2$ = $C_1$- bis $C_4$-Alkyl oder beide $R^2$ für eine $C_2$- bis $C_4$-Alkylengruppe stehen,
einsetzt.

5. Verwendung der verbrückten, wasserlöslichen Copolymerisate nach Anspruch 1, als Zusatz zum Papierstoff bei der Papierherstellung zur Erhöhung der Naßfestigkeit von Papier.